# FASCICULE DE BREVET EUROPEEN

(11) **EP 1 665 138 B1**
(45) Date de publication et mention de la délivrance du brevet: **29.07.2009**
(21) Numéro de dépôt: 04787363.3
(22) Date de dépôt: 13.09.2004
(51) Int. Cl.: G06K 19/07

(54) **SYSTEME COMPORTANT UNE PLURALITE DE DISPOSITIFS ADRESSABLES PAR RADIOFREQUENCE ET PROCEDE D'ADRESSAGE PAR ACTIVATION D'UN MODE TRANSPARENT**
SYSTEM MIT MEHREREN EINRICHTUNGEN, DIE DURCH FUNKFREQUENZ ADRESSIERT WERDEN KÖNNEN UND VERFAHREN ZUR ADRESSIERUNG DURCH AKTIVIERUNG EINES TRANSPARENTEN MODUS
SYSTEM COMPRISING A PLURALITY OF DEVICES THAT CAN BE ADDRESSED BY RADIOFREQUENCY, AND METHOD FOR ADDRESSING BY ACTIVATION OF A TRANSPARENT MODE

(30) Priorité: 16.09.2003 FR 0310858
(43) Date de publication de la demande: 07.06.2006
(73) Titulaire: COMMISSARIAT A L'ENERGIE ATOMIQUE, 75752 Paris 15ème (FR)
(72) Inventeur: CROCHON, Elisabeth, F-38320 Poisat (FR); TÉTU, Yann, F-38000 Grenoble (FR); REVERDY, Jacques, F-38920 Crolles (FR)
(74) Mandataire: Hecké, Gérard
(86) Numéro de dépôt international: PCT/FR2004/002317
(87) Numéro de publication internationale: WO 2005/029403

(56) Documents cités:
- WO-A-01/94967
- US-A- 5 621 913

## Description

### Domaine technique de l'invention

L'invention concerne un système d'identification comportant une pluralité de dispositifs adressables par radiofréquence par une unité de lecture comportant une antenne de lecture, chaque dispositif comportant
- un circuit de traitement connecté à une première antenne, destinée à être couplée à une antenne extérieure,
- des moyens de récupération d'énergie et une seconde antenne destinée à être couplée à une antenne d'au moins un dispositif de rang supérieur, le circuit de traitement comportant des moyens d'application de signaux radiofréquence aux bornes de la seconde antenne,
   chaque dispositif ayant un rang prédéterminé, l'antenne extérieure à laquelle est couplée la première antenne du dispositif de rang un étant l'antenne de lecture et au moins deux dispositifs de rangs adjacents étant agencés de manière à établir un couplage électromagnétique entre la première antenne d'un dispositif de rang supérieur à un et la seconde antenne du dispositif de rang inférieur.

### État de la technique

L'utilisation d'étiquettes sans contact de type RFID (« radiofrequency identification ») permet d'identifier tous les objets munis d'une telle étiquette présents dans le champ de l'antenne de lecture. Afin de pouvoir identifier les étiquettes dans toutes positions et orientations spatiales, l'antenne de lecture est généralement complexe et présente une structure tridimensionnelle. Typiquement, le champ actif est relativement grand (de l'ordre du m³) et l'identification se fait successivement selon les trois axes pour activer toutes les étiquettes. Cette méthode d'identification est bien adaptée à l'identification d'objets en vrac. En effet, dans ce cas, la position des objets est inconnue et l'organisation spatiale des objets n'est pas figée. Un problème rencontré avec cette méthode est la perte de toute information de l'agencement relatif des étiquettes entre elles présentes dans le champ du lecteur. Par ailleurs, cette méthode d'identification sans contact peut présenter des limites de portée.

Le document W00194967, par exemple, décrit un système pour localiser des dispositifs de type RFID et des étiquettes de type RFID. Une étiquette est reliée à un ordinateur principal par l'intermédiaire d'un desdits dispositifs. Le dispositif communique avec l'étiquette par l'intermédiaire d'un canal de communication radiofréquence et avec l'ordinateur principal par l'intermédiaire d'un autre canal de communication radiofréquence. Le dispositif comporte une antenne pour chacun des canaux de communication. Eventuellement, un tel dispositif peut être relié à l'ordinateur principal par l'intermédiaire d'un autre des dispositifs ou de plusieurs autres dispositifs.

### Objet de l'invention

L'invention a pour but de remédier à ces inconvénients et, en particulier, de permettre de localiser des objets les uns par rapport aux autres, notamment des objets disposés selon un ordre hiérarchique.

Selon l'invention, ce but est atteint par les revendications annexées et, en particulier, par le fait qu'un dispositif de rang prédéterminé est associé à un sous-ensemble de dispositifs de rang supérieur, de manière à former une arborescence hiérarchique.

L'invention a également pour but un procédé d'adressage des dispositifs du système, l'adressage d'un dispositif de rang supérieur à un par l'unité de lecture étant effectué par l'intermédiaire des dispositifs de rang inférieurs associés.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente un exemple de système d'identification.
La figure 2 illustre schématiquement un exemple de dispositif adressable par radiofréquence.
La figure 3 illustre schématiquement l'arborescence hiérarchique d'un mode de réalisation particulier d'un système selon l'invention.
La figure 4 illustre en perspective les orientations et les positions des antennes d'un mode de réalisation particulier d'un système selon l'invention.
La figure 5 représente un mode de réalisation particulier d'un écran électromagnétique et de sa position par rapport à un dispositif selon l'invention.
La figure 6 montre un organigramme d'un mode de réalisation particulier du procédé d'adressage selon l'invention.

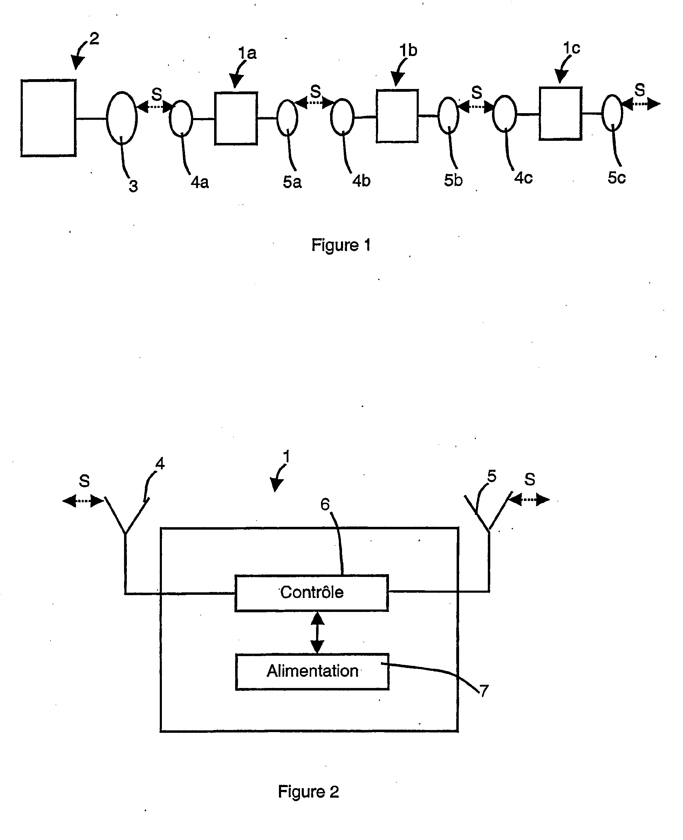

Sur la figure 1, trois dispositifs 1 (respectivement 1a, 1b et 1c) adressables par radiofréquence par une unité de lecture 2 reçoivent des signaux S émis par l'antenne de lecture 3 de l'unité de lecture 2. Chaque dispositif 1 comporte une première antenne 4 (respectivement 4a, 4b et 4c) couplée à une antenne extérieure, et une seconde antenne 5 (respectivement 5a, 5b et 5c) destinée à être couplée à une antenne d'un dispositif de rang supérieur. Ainsi, l'antenne extérieure à laquelle est couplée la première antenne 4a du dispositif 1a, de rang un, est l'antenne de lecture 3, tandis que les premières antennes 4b et 4c des dispositifs 1 b et 1 c, respectivement de rang deux et trois, sont couplés respectivement aux secondes antennes 5a et 5b des dispositifs 1 a et 1 b de rang inférieur adjacent.

Sur la figue 1, un mode transparent de tous les dispositifs 1 est activé. Chaque dispositif 1 en mode transparent transmet à sa seconde antenne 5 les signaux S reçus sur sa première antenne 4 et retransmet à sa première antenne 4 les signaux qu'il reçoit sur sa seconde antenne 5. Ainsi, les signaux S sont transmis par chacun des dispositifs 1 au dispositif de rang adjacent dans les deux sens. Ainsi, l'adressage d'un dispositif 1 de rang supérieur à un par l'unité de lecture 2 peut être effectué par l'intermédiaire des dispositifs 1 de rang inférieurs associés. En activant successivement le mode transparent des dispositifs en fonction de leur rang, la position de chacun des dispositifs peut être déterminée par rapport aux autres dispositifs du système.

Comme représenté à la figure 2, le dispositif 1 comporte un circuit de traitement 6 (circuit de contrôle) et un circuit de récupération d'énergie 7, ces circuits pouvant être réalisés, par exemple, par un circuit intégré. Ainsi, chaque dispositif 1 peut recevoir de l'énergie électromagnétique par l'intermédiaire de sa première antenne 4, afin d'alimenter son circuit de traitement et, par l'intermédiaire de sa seconde antenne 5, les dispositifs associés de rang supérieur. Sur la figure 2, le mode transparent du dispositif 1 est activé et, ainsi, le circuit de traitement 6 applique les signaux S radiofréquence, reçus sur sa première antenne 4, aux bornes de sa seconde antenne 5.

Ce système présente, en particulier, de l'intérêt pour un système comportant une pluralité de dispositifs 1 attachés à des objets disposés selon un ordre spatial prédéterminé, par exemple, dans le domaine de la grande distribution, des bibliothèques et des archives, où les objets, notamment les marchandises, les livres où les dossiers, sont rangés dans l'espace selon un ordre, par exemple hiérarchique.

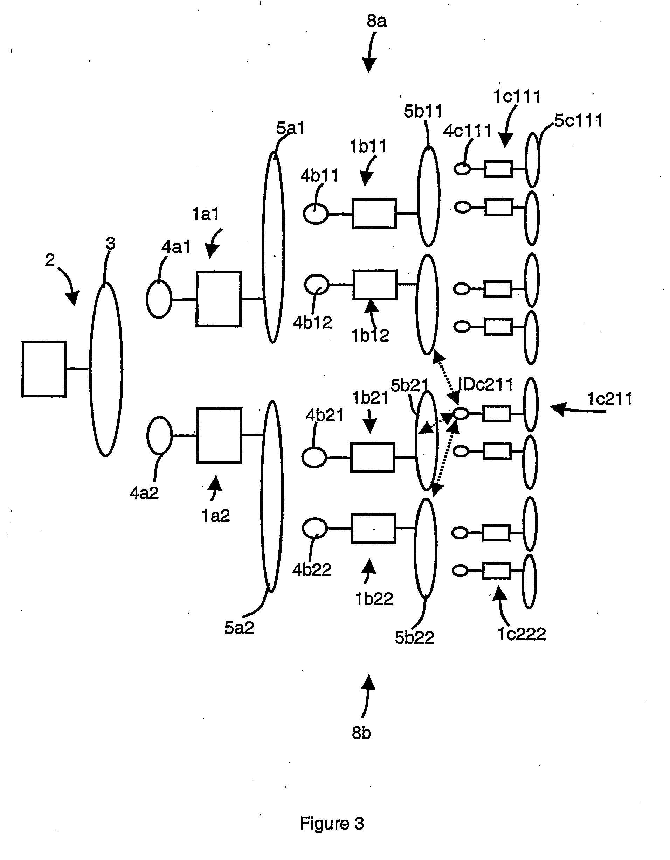

Le système selon l'invention représenté à la figure 3 comporte deux dispositifs 1a de rang un (respectivement 1a1 et 1a2), quatre dispositifs 1 b (respectivement 1b11, 1b12, 1b21 et 1b22) de rang deux et huit dispositifs 1 c de rang trois. Un dispositif 1 de rang prédéterminé est respectivement associé à un sous-ensemble 8a, 8b de deux dispositifs 1 de rang supérieur, de manière à former une arborescence hiérarchique. Ainsi, les dispositifs 1a1 et 1a2 de rang un sont chacun associés à deux dispositifs 1b de rang deux (respectivement 1b11 et 1b12 d'une part et 1b21 et 1b22 d'autre part). De même, chaque dispositif 1b11 à 1b22 de rang deux est associé à deux dispositifs 1c de rang 3 (1b11 est associé à 1c111 et 1c112, 1b12 à 1c121 et 1c122, 1b21 à 1c211 et 1c212 et 1b22 à 1c221 et 1c222). Afin que la seconde antenne 5a d'un dispositif 1a (1a1, respectivement 1a2) de rang un ne soit couplée qu'aux premières antennes 4b (4b11 et 4b12, respectivement 4b21 et 4b22) des dispositifs 1b de rang deux associés, les dispositifs 1b (1b21 et 1b22, respectivement 1b11 et 1b12) non-associés au dispositif 1 a sont spatialement éloignés du dispositif 1a (1a1, respectivement 1 a2). Les antennes des dispositifs de rang non-adjacents, par exemple les secondes antennes 5a des dispositifs 1a et les premières antennes 4c des dispositifs 1c, sont également spatialement éloignées de manière à minimiser le couplage électromagnétique entre elles.

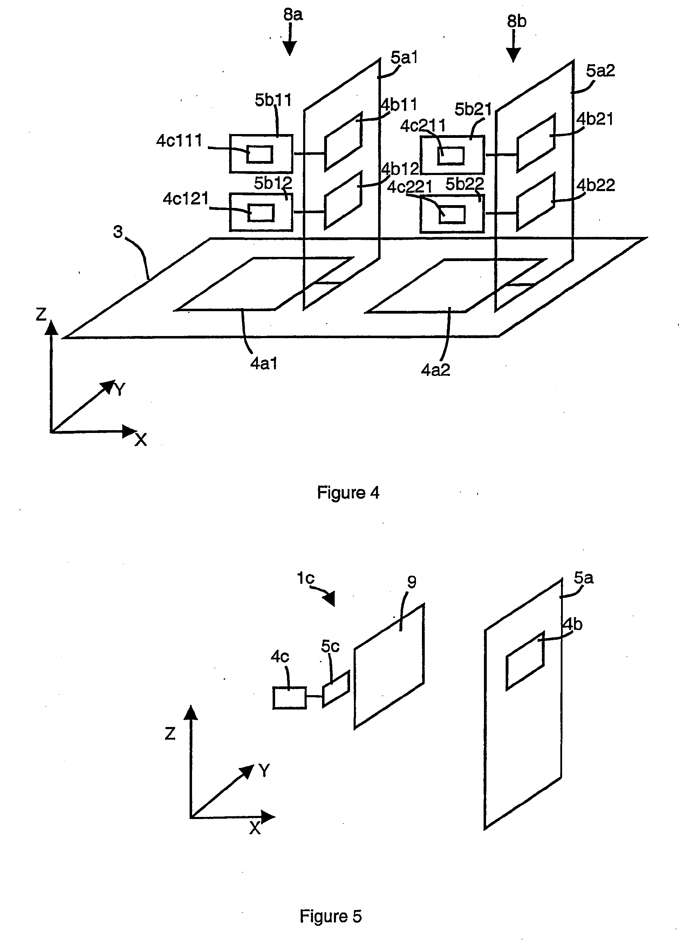

Dans le mode de réalisation particulier représenté à la figure 4, chaque antenne 3, 4 et 5 est une antenne plane, schématisée par un rectangle. Des dispositifs 1 ayant des antennes sensiblement planes peuvent, par exemple, être attachés à des récipients dans le domaine de la distribution de marchandises. Par exemple, les dispositifs 1a peuvent être attachés à des palettes, les dispositifs 1b à des emballages collectifs et les dispositifs 1c à l'emballage des produits individuels. Dans ce cas, les emballages collectifs peuvent être interprétés comme contenu des palettes et comme contenant les produits individuels.

Sur la figure 4, l'antenne de lecture 3 et les premières antennes 4a1 et 4a2 associées sont disposées dans deux plans proches, parallèles au plan XY d'un référentiel cartésien défini par les axes X, Y et Z, de manière à établir un couplage électromagnétique entre-elles. La seconde antenne 5a1 (respectivement 5a2) d'un dispositif 1a de rang 1 et les premières antennes 4b11 et 4b12 (respectivement 4b21 et 4b22) associées des dispositifs 1b de rang deux sont disposées dans deux plans proches, parallèles au plan YZ, de manière à établir un couplage électromagnétique entre les antennes associées. Les secondes antennes 5b11, 5b12, 5b21 et 5b22 de tous les dispositifs 1b de rang deux sont disposées dans un même plan, parallèle au plan XZ et proche d'un plan parallèle dans lequel sont disposées toutes les premières antennes 4c des dispositifs 1c de rang trois, de manière à établir un couplage électromagnétique entre les antennes respectivement associées. Dans le mode de réalisation particulier représenté à la figure 4, les antennes 4 et 5 d'un même dispositif sont orthogonales. De plus, les secondes antennes 5 d'un dispositif sont parallèles aux premières antennes des dispositifs de rang inférieur. Par ailleurs, les antennes de deux dispositifs 1a et 1c de rang non-adjacents sont disposées orthogonalement dans l'espace de manière à minimiser le couplage électromagnétique entre elles.

Comme précédemment sur la figure 3, les premières antennes 4b11 et 4b12 des dispositifs du sous-ensemble 8a, associé au dispositif 1a1, sont sensiblement isolées, par leur distance dans l'espace, de la seconde antenne 5a2 du dispositif 1 a2 non-associé de rang inférieur.

Dans un autre mode de réalisation particulier d'un système selon l'invention, représenté à la figure 5, un dispositif 1c de rang trois comporte un écran 9 électromagnétique, permettant d'isoler sa seconde antenne 5c, destinée à être couplée à une première antenne d'un dispositif de rang quatre, des premières antennes 4b, parallèles, du dispositif 1b associé et des secondes antennes 5a, également parallèles, du dispositif 1a associé. L'écran 9 électromagnétique peut, par exemple, être constitué d'une paroi doublée de ferrite. La paroi, placée parallèlement à l'antenne associée, permet de canaliser les lignes de champ électromagnétique et de ne rayonner que d'un côté.

Pendant le procédé d'adressage des dispositifs du système, l'unité de lecture 2 émet un champ électromagnétique vers les dispositifs 1 a dont les premières antennes 4a sont couplées à l'antenne de lecture 3. L'unité de lecture 2 fournit les données et l'énergie si nécessaire pour alimenter chaque dispositif, par l'intermédiaire des dispositifs associés de rang inférieur configurés en mode transparent.

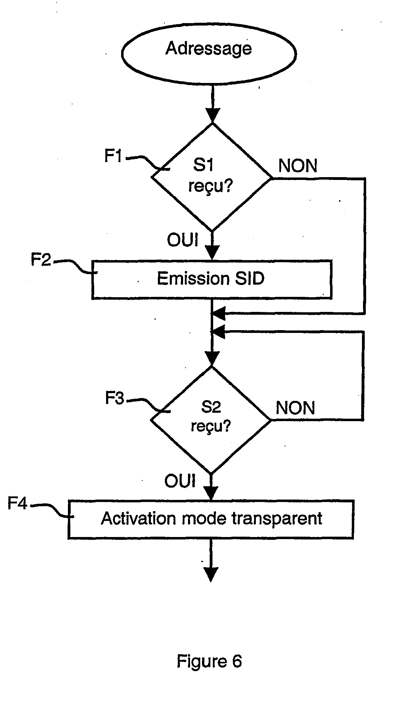

Dans un mode de réalisation particulier d'un procédé d'adressage, représenté à la figure 6, chaque dispositif 1 a un code d'identification ID unique. L'unité de lecture 2 émet des signaux S1 de demande d'identification. Comme illustré à la figure 6, chaque dispositif 1 vérifie, dans une étape F1, s'il a reçu un signal S1 et émet, dans une étape F2, un signal SID représentatif de son code d'identification ID lorsqu'il reçoit un signal S1 de demande d'identification (sortie OUI de F1). Après l'étape F2 ou lorsque le dispositif 1 ne reçoit pas de signal de demande d'identification (sortie NON de F1), chaque dispositif 1 vérifie, dans une étape F3, s'il a reçu un signal S2 d'activation de mode transparent: Puis, il contrôle, dans une étape F4, l'activation du mode transparent lors de la réception d'un signal S2 d'activation de mode transparent (sortie OUI de F3). Les signaux d'activation S2 de mode transparent sont émis par l'unité de lecture 2 et destinés sélectivement à chacun des dispositifs 1 prédéterminés. Si aucun signal S2 d'activation de mode transparent n'est reçu (sortie NON de F3), le dispositif 1 continue à vérifier, dans l'étape F3, s'il a reçu un signal S2 d'activation de mode, transparent.

Le procédé d'adressage permet d'envoyer un signal S1 de demande d'identification à tous les dispositifs 1 de même rang lorsque tous les dispositifs 1 de rang inférieur sont dans le mode transparent. Dans le cas où aucun dispositif 1 n'est dans le mode transparent, seuls les dispositifs 1 de rang un reçoivent les signaux S émis par l'unité de lecture 2.

Il est également possible d'activer le mode transparent d'un seul dispositif d'un rang déterminé et d'identifier uniquement les dispositifs de rang supérieur associés à ce dispositif de rang inférieur, qui est dans le mode transparent. Afin d'activer le mode transparent d'un seul dispositif de rang déterminé, le signal SID représentatif du code d'identification du dispositif ciblé peut être émis en association avec le signal d'activation S2 de mode transparent. Ainsi, chaque dispositif recevant les signaux S2 et SID compare son code d'identification ID au code représenté par le signal SID et n'active son mode transparent que si ces codes sont identiques. Ensuite, en activant le mode transparent d'un seul dispositif de rang supérieur, seuls les dispositifs associés de rang supérieur audit rang supérieur sont identifiés. Ainsi, un dispositif prédéterminé de rang élevé peut être identifié rapidement sans activer la totalité des dispositifs des sous-ensembles non-associés.

A titre d'exemple, l'unité de lecture 2 alimente tous les dispositifs 1a de rang un et leur envoie un signal S1 de demande d'identification. Tous les dispositifs 1a présents dans le champ électromagnétique émis par l'unité de lecture 2 et couplés par l'intermédiaire de leurs premières antennes 4a à l'antenne de lecture 3 émettent le signal SID représentatif de leur code d'identification. Ensuite, l'unité de lecture 2 sélectionne un dispositif 1a déterminé (1a1 ou 1 a2 par exemple) parmi les dispositifs 1a de rang un précédemment identifiés et lui envoie le signal d'activation S2 de mode transparent. Le dispositif 1a sélectionné (1a1 dans l'exemple choisi) contrôle l'activation de son mode transparent de manière à appliquer un champ électromagnétique radiofréquence aux bornes de sa seconde antenne 5a, alimentant ainsi uniquement les dispositifs 1 b (1b11 et 1 b12 dans l'exemple choisi) de rang deux appartenant au sous-ensemble associé.

Ensuite, l'unité de lecture émet un signal S1 de demande d'identification destiné aux dispositifs 1 b (1b11 et 1b12, par exemple) de rang deux appartenant au sous-ensemble associé au dispositif 1a sélectionné (1a1 dans l'exemple choisi). Le signal S1 de demande d'identification est transmis aux dispositifs 1b correspondants par l'intermédiaire du dispositif 1a sélectionné. Chaque dispositif 1 b recevant ce signal (1b11 et 1b12 dans l'exemple choisi) renvoie, ensuite, un signal SID représentatif de son code d'identification à l'unité de lecture 2 par l'intermédiaire du dispositif 1a sélectionné. Tous les autres dispositifs 1, non-sélectionnés, restent muets. Ensuite, l'unité de lecture 2 sélectionne un dispositif 1b (par exemple 1b11) parmi les dispositifs 1b précédemment identifiés de rang deux et lui envoie le signal d'activation S2 de mode transparent. De manière analogue aux étapes précédentes, l'unité de lecture 2 poursuit l'identification d'un dispositif 1c (par exemple 1c111) de rang trois, par l'intermédiaire des dispositifs 1a et 1b associés.

Le procédé d'adressage peut comporter une procédure de correction d'erreur lorsqu'un même code d'identification ID est néanmoins transmis par l'intermédiaire de plusieurs dispositifs 1 de même rang. Par exemple, le dispositif 1c211 (figure 3), de rang trois, transmet son code d'identification IDc211 par l'intermédiaire de trois dispositifs de rang deux, par exemple par les dispositifs 1b12, 1b21 et 1 b22. La position du dispositif émettant le code IDc211 n'est alors pas déterminée de manière univoque. La procédure de correction d'erreur permet d'associer le code d'identification IDc211 au dispositif 1c211 couplé au dispositif 1b21 qui est disposé au milieu des trois dispositifs 1 de rang deux ayant transmis ledit code d'identification IDc211, ce qui, dans l'exemple représenté, fournit la position correcte. En pratique, le code d'identification est alors associé au dispositif le plus proche du centre de gravité des différents dispositifs concernés.

La disposition et l'orientation dans l'espace des différentes antennes destinées à être couplées étant sélectionnées de manière à obtenir un couplage optimal, la puissance électromagnétique émise par l'unité de lecture 2 peut être inférieure à celle nécessaire dans les dispositifs connus.

## Revendications

1. Système d'identification comportant une pluralité de dispositifs (1) adressables par radiofréquence par une unité de lecture (2) comportant une antenne de lecture (3), chaque dispositif (1) comportant
- un circuit de traitement (6) connecté à une première antenne (4), destinée à être couplée à une antenne extérieure,
- des moyens de récupération d'énergie (7) et une seconde antenne (5) destinée à être couplée à une antenne (4) d'au moins un dispositif (1) de rang supérieur, le circuit de traitement (6) comportant des moyens d'application de signaux radiofréquence (S) aux bornes de la seconde antenne (5),
chaque dispositif (1) ayant un rang prédéterminé, l'antenne extérieure à laquelle est couplée la première antenne (4a) du dispositif (1a) de rang un étant l'antenne de lecture (3) et au moins deux dispositifs (1a, 1 b) de rangs adjacents étant agencés de manière à établir un couplage électromagnétique entre la première antenne (4b) d'un dispositif (1 b) de rang supérieur à un et la seconde antenne (5a) du dispositif (1a) de rang inférieur, système **caractérisé en ce qu'**un dispositif (1) de rang prédéterminé est associé à un sous-ensemble (8) de dispositifs (1) de rang supérieur, de manière à former une arborescence hiérarchique.

2. Système selon la revendication 1, **caractérisé en ce que** les antennes (4, 5) de deux dispositifs (1a, 1c) de rangs non-adjacents sont disposées dans l'espace de manière à minimiser le couplage électromagnétique entre elles.

3. Système selon la revendication 1, **caractérisé en ce qu'**il comporte des écrans (9) électromagnétiques.

4. Système selon l'une quelconque des revendications 1 à 3, **caractérisé en ce qu'**il comporte une pluralité de dispositifs (1) de même rang, les premières antennes (4) de tous les dispositifs (1) du même rang ayant une même orientation spatiale et les secondes antennes (5) de tous les dispositifs (1) du même rang ayant une même orientation spatiale.

5. Système selon la revendication 4, **caractérisé en ce que** les premières antennes (4b11, 4b12) des dispositifs (1b11, 1b12) d'un sous-ensemble (8a) sont sensiblement isolées des secondes antennes (5a2) des dispositifs (1 a2) de rang inférieur non-associés.

6. Procédé d'adressage des dispositifs du système selon l'une des revendications 1 à 5, **caractérisé en ce que** l'adressage d'un dispositif (1) de rang supérieur à un par l'unité de lecture (2) est effectué par l'intermédiaire des dispositifs (1) de rang inférieur associés

7. Procédé selon la revendication 6, **caractérisé en ce que**, chaque dispositif (1) ayant un code d'identification (ID) unique,
- l'unité de lecture (2) émet des signaux (S1) de demande d'identification,
- chaque dispositif émet un signal (SID) représentatif de son code d'identification (ID) lorsqu'il reçoit un signal (S1) de demande d'identification,
- l'unité de lecture (2) émet des signaux d'activation (S2) de mode transparent destinés sélectivement à au moins un dispositif (1) préalablement identifié,
le dispositif (1) en mode transparent transmettant à sa seconde antenne (5) les
signaux (S) reçus sur sa première antenne (4) et retransmettant à sa première antenne (4) les signaux (S) qu'il reçoit sur sa seconde antenne (5).

8. Procédé selon l'une des revendications 6 et 7, **caractérisé en ce qu'**il comporte une procédure de correction d'erreur lorsqu'un même code d'identification (ID) est transmis par l'intermédiaire de plusieurs dispositifs (1 b12, 1b21 et 1b22) de même rang.

9. Procédé selon la revendication 8, **caractérisé en ce que** la procédure de correction d'erreur associe ledit code d'identification (ID) à un dispositif (1c211) couplé au dispositif (1b21) disposé au milieu desdits dispositifs (1b12, 1b21 et 1b22) de même rang ayant transmis ledit code d'identification (ID).

## Claims

1. Identification system comprising a plurality of devices (1) able to be addressed by radio frequency by a reading unit (2) comprising a reading antenna (3), each device (1) comprising
- a processing circuit (6) connected to a first antenna (4), designed to be coupled to an external antenna,
- energy recovery means (7) and a second antenna (5) designed to be coupled to an antenna (4) of at least one higher-ranking device (1), the processing circuit (6) comprising means for applying radio frequency signals (S) to the terminals of the second antenna (5),
each device (1) having a predetermined ranking, the external antenna to which the first antenna (4a) of the rank one device (1 a) is coupled being the reading antenna (3) and at least two devices (1 a, 1 b) of adjacent rankings being arranged in such a way as to establish an electromagnetic coupling between the first antenna (4b) of a device (1b) of ranking higher than one and the second antenna (5a) of the lower-ranking device (1 a), system **characterized in that** a device (1) of specific ranking is associated with a sub-set (8) of higher-ranking devices (1) so as to form a hierarchical tree structure.

2. System according to claim 1, **characterized in that** the antennas (4, 5) of two devices (1 a, 1 c) of non-adjacent rankings are arranged in space in such a way as to minimize the electromagnetic coupling between them.

3. System according to claim 1, **characterized in that** it comprises electromagnetic shields (9).

4. System according to any one of claims 1 to 3, **characterized in that** it comprises a plurality of devices (1) of the same ranking, the first antennas (4) of all the devices (1) of the same ranking having one and the same spatial orientation and the second antennas (5) of all the devices (1) of the same ranking having one and the same spatial orientation.

5. System according to claim 4, **characterized in that** the first antennas (4b11, 4b12) of the devices (1b11, 1b12) of a sub-set (8a) are substantially isolated from the second antennas (5a2) of the non-associated lower-ranking devices (1 a2).

6. Method for addressing the devices of the system according to one of claims 1 to 5, **characterized in that** addressing by the reading unit (2) of a device (1) ranking higher than one is performed by means of the associated lower-ranking devices (1).

7. Method according to claim 6, **characterized in that**, each device (1) having a unique identification code (ID),
- the reading unit (2) transmits identification request signals (S1),
- each device transmits a signal (SID) representative of its identification code (ID) when it receives an identification request signal (S1),
- the reading unit (2) transmits transparent mode activation signals (S2) selectively intended for at least one previously identified device (1),
the device (1) in transparent mode transmitting the signals (S) received on its first antenna (4) to its second antenna (5) and retransmitting the signals (S) it receives on its second antenna (5) to its first antenna (4).

8. Method according to one of claims 6 and 7, **characterized in that** it comprises an error correction procedure when the same identification code (ID) is transmitted by means of several devices (1b12, 1b21 and 1b22) of the same ranking.

9. Method according to claim 8, **characterized in that** the error correction procedure associates said identification code (ID) with a device (1c211) coupled to the device (1b21) located in the middle of said devices (1b12, 1b21 and 1b22) of the same ranking having transmitted said identification code (ID).

## Patentansprüche

1. Erkennungssystem mit mehreren mittels einer Leseeinheit (2) per Radiofrequenz adressierbaren Vorrichtungen (1), welche Leseeinheit eine Leseantenne (3) umfasst, wobei jede Vorrichtung (1) aufweist :
- eine Verarbeitungsschaltung (6), die an eine erste Antenne (4) verbunden und dazu bestimmt ist, an eine Außenantenne gekoppelt zu werden,
- Mittel zur Energierückgewinnung (7) sowie eine zweite Antenne (5), die dazu bestimmt ist, an eine Antenne (4) mindestens einer höherrangigen Vorrichtung (1) gekoppelt zu werden, wobei die Verarbeitungsschaltung (6) Mittel zum Anlegen von Radiofrequenzsignalen (S) an die Klemmen der zweiten Antenne (5) umfasst,
wobei jede Vorrichtung (1) einen vorbestimmten Rang hat und die Außenantenne, an die die erste Antenne (4a) der Vorrichtung (1 a) mit Rang eins gekoppelt ist, die Leseantenne (3) ist und wobei mindestens zwei Vorrichtungen (1 a, 1b) mit angrenzenden Rängen so angeordnet sind, dass sie eine elektromagnetische Kopplung zwischen der ersten Antenne (4b) einer Vorrichtung (1 b) mit einem Rang größer als eins und die zweite Antenne (5a) der Vorrichtung (1 a) mit niedrigerem Rang herstellen, System, das **dadurch gekennzeichnet ist, dass** eine Vorrichtung (1) eines vorbestimmten Rangs mit einer Untergruppe (8) von Vorrichtungen (1) höheren Rangs verbunden ist, sodass eine hierarchische Baumstruktur entsteht.

2. System nach Anspruch 1, **dadurch gekennzeichnet, dass** die Antennen (4, 5) zweier Vorrichtungen (1 a, 1 c) mit nicht benachbarten Rängen so im Raum angeordnet sind, dass die elektromagnetische Kopplung zwischen ihnen minimiert wird.

3. System nach Anspruch 1, **dadurch gekennzeichnet, dass** es elektromagnetische (9) Abschirmungen aufweist.

4. System nach einem der Ansprüche 1 bis 3, **dadurch gekennzeichnet, dass** es mehrere Vorrichtungen (1) gleichen Rangs umfasst, wobei die ersten Antennen (4) aller gleichrangigen Vorrichtungen (1) eine gleiche Ausrichtung im Raum und die zweiten Antennen (5) aller gleichrangigen Vorrichtungen (1) eine gleiche Ausrichtung im Raum aufweisen.

5. System nach Anspruch 4, **dadurch gekennzeichnet, dass** die ersten Antennen (4b11, 4b12) der Vorrichtungen (1b11, 1b12) einer Untergruppe (8a) im Wesentlichen von den zweiten Antennen (5a2) der ihnen nicht zugeordneten Vorrichtungen (1 a2) mit niedrigerem Rang isoliert sind.

6. Adressierungsverfahren für die Vorrichtungen des Systems nach einem der Ansprüche 1 und 5, **dadurch gekennzeichnet, dass** die Adressierung einer Vorrichtung (1) mit einem Rang größer als eins durch die Leseeinheit (2) mittels zugehöriger Vorrichtungen (1) niedrigeren Rangs erfolgen.

7. Verfahren nach Anspruch 6, **dadurch gekennzeichnet, dass** jede Vorrichtung (1) einen einmalig vorkommenden Erkennungscode (ID) hat, und dass
- die Leseeinheit (2) Erkennungsnachfrage-Signale (S1) ausstrahlt,
- jede Vorrichtung ein Signal (SID) ausstrahlt, das repräsentativ für ihren Erkennungscode (ID) ist, wenn sie ein Erkennungsnachfrage-Signal (S1) empfängt,
- die Leseeinheit (2) Aktivierungssignale (S2) mit transparentem Modus ausstrahlt, die selektiv für mindestens eine vorab erkannte Vorrichtung (1) bestimmt sind,
wobei die Vorrichtung (1) in transparentem Modus die an ihrer ersten Antenne (4) empfangenen Signale (S) an ihre zweite Antenne (5) überträgt und an ihre erste Antenne (4) die Signale (S) zurücküberträgt, die sie an ihrer zweiten Antenne (5) empfängt.

8. Verfahren nach einem der Ansprüche 6 und 7, **dadurch gekennzeichnet, dass** es ein Fehlerkorrekturverfahren umfasst, wenn ein gleicher Erkennungscode (ID) von mehreren gleichrangigen Vorrichtungen (1b12, 1 b21 und 1 b22) übertragen wird.

9. Verfahren nach Anspruch 8, **dadurch gekennzeichnet, dass** das Fehlerkorrekturverfahren den genannten Erkennungscode (ID) einer Vorrichtung (1c211) zuordnet, die an die Vorrichtung (1b21) gekoppelt ist, die in der Mitte der genannten Vorrichtungen (1 b12, 1 b21 und 1 b22) gleichen Rangs angeordnet ist, die den genannten Erkennungscode (ID) übertragen hat.
